# EUROPEAN PATENT SPECIFICATION

(11) **EP 3 401 919 B1**
(45) Date of publication and mention of the grant of the patent: **12.08.2020**
(21) Application number: 16883937.1
(22) Date of filing: 15.04.2016
(51) Int. Cl.: G21B 1/23, G21K 1/10

(54) **PLASMA DIAGNOSIS SYSTEM USING MULTIPLE PATH THOMSON SCATTERING**
PLASMADIAGNOSESYSTEM MIT MEHRPFAD-THOMSONSTREUUNG
SYSTÈME DE DIAGNOSTIC À PLASMA UTILISANT UNE DIFFUSION DE THOMSON À TRAJETS MULTIPLES

(30) Priority: 08.01.2016 KR 20160002611
(43) Date of publication of application: 14.11.2018
(73) Proprietor: Industry-University Cooperation Foundation Sogang University, Seoul 04107 (KR)
(72) Inventor: CHO, Kyu Man, Seoul 01020 (KR); YOON, Seung Hyun, Seoul 02726 (KR); AHN, Wha-Keun, Andong-si Gyeongsangbuk-do 36742 (KR); PARK, Jun Gyu, Seoul 07359 (KR)
(74) Representative: Krauss, Jan
(86) International application number: PCT/KR2016/003951
(87) International publication number: WO 2017/119551

(56) References cited:
- JP-A- H05 312 712
- JP-A- H06 102 086
- JP-A- 2003 240 715
- JP-A- 2003 240 715
- KR-A- 20130 099 641
- US-A- 5 760 388
- KUMAR AJAI ET AL: "Design of multipulse Thomson scattering diagnostic for SST-1 tokamak", REVIEW OF SCIENTIFIC INSTRUMENTS, AIP, MELVILLE, NY, US, vol. 78, no. 4, 16 April 2007 (2007-04-16) , pages 43507-43507, XP012103896, ISSN: 0034-6748, DOI: 10.1063/1.2724775
- MURMANN H ET AL: "THE THOMSON SCATTERING SYSTEMS OF THE ASDEX UPGRADE TOKAMAK", REVIEW OF SCIENTIFIC INSTRUMENTS, AIP, MELVILLE, NY, US, vol. 63, no. 10 PT. 02, 1 October 1992 (1992-10-01), pages 4941-4943, XP000321020, ISSN: 0034-6748, DOI: 10.1063/1.1143504
- TOGASHI H ET AL: "Thomson scattering measurements in low-density plasmas in the TST-2 spherical tokamak", JOURNAL OF INSTRUMENTATION, INSTITUTE OF PHYSICS PUBLISHING, BRISTOL, GB, vol. 10, no. 12, 21 December 2015 (2015-12-21), XP020293278, ISSN: 1748-0221, DOI: 10.1088/1748-0221/10/12/C12020 [retrieved on 2015-12-21]

## Description

### TECHNICAL FIELD

The present invention relates to a plasma diagnosis system using Thomson scattering, and more particularly, to a plasma diagnosis system using multiple-path Thomson scattering capable of measuring an accurate Thomson scattering signal by removing a background scattering noise signal from a mixed signal in which the Thomson scattering signal and the background scattering noise signal are mixed by using an optical system which is configured to generate multiple paths in which polarization is rotated by 90 degrees according to the number of times of propagation in the plasma in a nuclear fusion reactor.

### BACKGROUND ART

In tokamak-type nuclear fusion, typically, deuterium atoms and tritium atoms are heated up to so high temperature to generate a plasma state in which ionized atomic nuclei and electrons have free mobility, and the plasma is confined by using a strong toroidal magnetic field, so that the nuclei overcome Coulomb force and come close enough to cause fusion reaction at sufficiently high temperature. In order to stably operate and control this high-temperature, high-density plasma state, it is necessary to know the temperature and density of the plasma, and thus, accurate measurement thereof is required. As a result of this request, various types of plasma diagnosis apparatuses have been developed and used. As one of the plasma diagnosis apparatuses, there is a diagnosis apparatus using Thomson scattering, which is an essential diagnosis apparatus for measuring temperature and density of electrons.

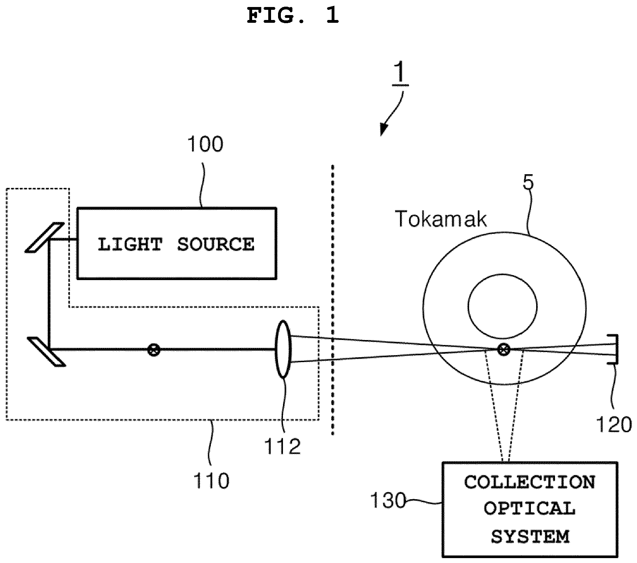

FIG. 1 is a configuration diagram schematically illustrating a diagnosis apparatus using Thompson scattering in the related art for diagnosing a state of plasma in a tokamak of a nuclear fusion reactor.

Referring to FIG. 1, a diagnosis apparatus 1 using Thomson scattering in the related art for diagnosing a state of plasma in a tokamak 5 of a nuclear fusion reactor includes a light source which outputs a strong pulsed laser beam polarized in a vertical direction, an optical system 110 which focuses the laser beam in the vertical polarization state into a plasma in the TOKAMAK, a laser beam dump 120 which is mounted outside the tokamak and absorbs and removes the laser beam emitted from the tokamak, and a collection optic system 130 which collects the light scattered by the laser beam.

More specifically, in order to measure the temperature and density of electrons in the plasma, the above-described diagnosis apparatus 1 using Thomson scattering focuses a laser pulse with a single wavelength (1064 nm) having a strong electric field intensity from the outside of the tokamak 5 into the plasma-filled tokamak by using the light source 100 and the optical system 110. The nuclei and electrons constituting the plasma are vibrated in the polarization direction of the electric field of the laser beam according to a temporal change of the strong unidirectional electric field strength (polarized light) of the focused laser beam, and a light beam with the same frequency as the incident laser beam is emitted and is subjected to Thompson scattering. In this case, the light is not subjected to Thomson scattering in the direction parallel to the polarization direction of the laser beam. Therefore, in the case where the polarization of the laser beam incident on the cross section of the tokamak in FIG. 1 is perpendicular to this cross section, scattered light is emitted in the direction of collection optic system, so that the scattered light can be received by the collection optic system. On the contrary, in the case where the laser beam is horizontally polarized with respect to the cross section of tokamak in FIG. 1, no Thomson scattered light is emitted toward the collection optic system, so that there is no Thomson scattered light received by the collection optic system.

On the other hand, since the plasmas are moving fast, the scattered light has a Doppler shift in wavelength due to the Doppler effect. Therefore, the diagnosis apparatus using Thomson scattering can acquire the temperature of electrons in the plasma by measuring the wavelength shift due to the Doppler effect and can also acquire the density of electrons according to the intensity of light to be measured. That is, if signals of the Thomson scattered light in the plasma are accurately measured, the temperature and density of the plasma can be accurately acquired.

However, there exist the light beams that are reflected by incomplete optical parts to be incident on the tokamak and the light beams that are scattered multiple times by wall surfaces of the tokamak and the like, and these light beams are called stray light. As the background noise caused by the stray light is included in the Thomson scattering signal measured by the diagnosis apparatus using Thomson scattering in the related art, there is a problem in that the accuracy of the measured Thompson scattering signal is lowered.

Documents XP012103896 and XP000321020 disclose multi-path Thomson scattering systems comprising in particular vertical Thomson scattering, VTS, horizontal Thomson scattering, HTS, and divertor Thomson scattering, HTS, systems, wherein VTS and DTS use the same laser system. Documents XP020293278 and JP2003240715 disclose additional Thomson scattering systems according to the prior art which include multi-pass, over the same one path within the plasma, systems allowing to increase the scattered signal intensity.

### SUMMARY OF THE INVENTION

### TECHNICAL PROBLEM

In order to solve the problems described above, the present invention is to provide a plasma diagnosis system using multiple-path Thompson scattering capable of measuring an accurate Thomson scattering signal from which a background scattering noise signal is removed by using an optical system including first and second beam focusing units which focus beams on different regions in plasma.

### SOLUTION TO PROBLEMS

According to the present invention, there is provided a plasma diagnosis system using multiple-path Thompson scattering, including: a light source which supplies pulsed laser beams having predetermined polarization and wavelength; an optical system which includes first and second beam focusing units performing respectively focusing on different regions in plasma and supplies a pulsed laser beam in a vertical polarization state and a pulsed laser beam in a horizontal polarization state to the first and second beam focusing units by using the pulsed laser beams supplied from the light source; a collection optic system which measures a first collection signal obtained by collecting signals scattered from the plasma by the pulsed laser beam focused by the first focusing unit and a second collection signal obtained by collecting signals scattered from the plasma by the pulsed laser beam focused by the second focusing unit and supplies the first and second collection signals; and a controller which measures a Thomson scattering signal for the plasma by using the first and second collection signals measured by the collection optic system, wherein the first and second collection signals are configured with one of a mixed signal in which a Thomson scattering signal and a background scattering noise signal are mixed and a background scattering noise signal according to a polarization state of a focused pulsed laser beam, and wherein the pulsed laser beams are supplied to the first and second regions in the plasma through the first and second beam focusing units, so that multiple-path scattering in which the polarization is rotated by 90 degrees according to the number of times of propagation in the plasma is generated in the plasma.

In the plasma diagnosis system using multiple-path Thompson scattering according to the invention, the optical system includes: a polarizing beam splitter PBS which is disposed on an optical path of the pulsed laser beam supplied from the light source; a reflecting mirror which is disposed in front of a first surface of the PBS by which the pulsed laser beam supplied from the light source is reflected and emitted to supply the pulsed laser beam transmitted from a second surface of the PBS again to the second surface of the PBS; a half wave plate which is disposed on the optical path behind the first surface of the PBS; a first beam focusing unit which includes two convex lenses disposed at positions separated by predetermined distances from two ends of the plasma and is configured to focus the pulsed laser beam in the first region in the plasma; a second beam focusing unit which includes two convex lenses disposed at positions separated by predetermined distances from two ends of the plasma and is configured to focus the pulsed laser beams in the second region in the plasma; and an optical path changing unit which supplies the pulsed laser beam output from the first beam focusing unit to the second beam focusing unit or supplies the pulsed laser beams output from the second beam focusing unit to the first beam focusing unit, wherein the pulsed laser beam in the vertical polarization state and the pulsed laser beam in the horizontal polarization state are supplied to the first and second regions in the plasma through the first and second beam focusing units, so that multiple-path Thomson scattering is generated in the plasma.

Preferably, if necessary, the plasma diagnosis system using multiple-path Thomson scattering according to the above aspect may further include an optical isolator between the light source and the optical system, wherein the optical isolator causes the pulsed laser beam supplied from the light source to propagate to the optical system but prevents the beam output from the optical system from entering the light source.

Preferably, the plasma diagnosis system using multiple-path Thompson scattering according to the above aspect may further include a trigger module which generates and outputs trigger signals when the pulsed laser beams in the horizontal polarization state and the pulsed laser beams in the vertical polarization state are supplied from the optical system, respectively, wherein the collection optic system is driven according to the trigger signals output from the trigger module.

Preferably, in the plasma diagnosis system using multiple-path Thompson scattering according to the above aspect, the trigger module is disposed between the light source and the optical system or at an arbitrary position of the optical system and generates and outputs the trigger signal when detecting that the pulsed laser beam is supplied from the light source to the optical system, detecting that the pulsed laser beam is supplied from the optical system to the plasma, or detecting that the pulsed laser beam is supplied at an arbitrary position of the optical system.

Preferably, in the plasma diagnosis system using multiple-path Thompson scattering according to the above aspect, the collection optic system may be configured with first and second collection optic systems, wherein the first collection optic system measures a scattering signal of the first collection optic system to supply a first collection signal, and the second collection optic system measures a scattering signal of the second collection optic system to supply a second collection signal. In the case where a separation distance between a scattering position by the first focusing unit and a scattering position by the second focusing unit is not large, one collection optic system can be used for the first and second collection optic systems.

Preferably, the plasma diagnosis system using multiple-path Thomson scattering according to the above aspect may be applied to a tokamak-type nuclear fusion reactor, wherein the optical system focuses a pulsed laser beam into a tokamak and has multiple paths to sequentially rotate polarization direction by 90 degrees, the collection optic system collects scattered optical signals in the tokamak and measures the scattered optical signals for each wavelength band by using a polychrometer, and the controller measures and supplies a Thomson scattering signal in the tokamak.

### EFFECTS OF THE INVENTION

The multiple-path plasma diagnosis system according to the present invention sequentially supplies a pulsed laser beam in a vertical polarization state and a pulsed laser beam in a horizontal polarization state to a tokamak to be focused, so that it is possible to measure and supply a Thomson scattering signal from which a background scattering noise signal is removed.

The multiple-path plasma diagnosis system according to the present invention generates scattering in two different regions inside a tokamak in a nuclear fusion reactor in a multiple path manner and measures the scattering signals in the respective regions, so that it is possible to measure a change in scattering signal according to positions in the tokamak, it is possible to temperature and density of electrons according to positions of plasma inside the tokamak, and it is possible to supply more useful information.

### BRIEF DESCRIPTION OF DRAWINGS

FIG. 1 is a configuration diagram schematically illustrating a diagnosis apparatus using single-path Thompson scattering in the related art for diagnosing a state of plasma in a tokamak of a nuclear fusion reactor.
FIG. 2 is a configuration diagram schematically illustrating a plasma diagnosis system using multiple-path Thomson scattering according to a preferred embodiment of the present invention.
FIG. 3 is a diagram illustrating a polarization state of a pulsed laser beam in each stage in the plasma diagnosis system using multiple-path Thomson scattering according to the preferred embodiment of the present invention.

### BEST MODE FOR CARRYING OUT THE INVENTION

In a plasma diagnosis system using multiple-path Thompson scattering according to the present invention, multiple-path scattering is generated by focusing pulsed laser beams on two different regions inside a tokamak of a nuclear fusion reactor, and scattering signals in the tokamak are measured in the multiple paths, so that it is possible to accurately measure the scattering signals. In addition, the plasma diagnosis system according to the present invention sequentially supplies pulsed laser beams in vertical and horizontal polarization states to the tokamak, measures a mixed signal in which a background scattering noise signal and a Thomson scattering signal are mixed by the pulsed laser beam in the vertical polarization state and measures a background scattering noise signal by the pulsed laser beam in the horizontal polarization state, removes the background scattering noise signal from the mixed signal, so that it is possible to accurately measure the Thomson scattering signal.

Hereinafter, a structure and operation of a plasma diagnosis system using multiple-path Thomson scattering according to a preferred embodiment of the present invention will be described in detail with reference to the accompanying drawings.

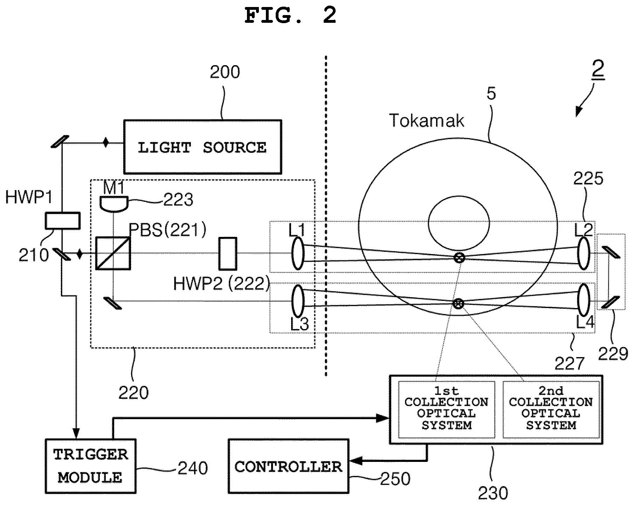

FIG. 2 is a configuration diagram schematically illustrating a plasma diagnosis system using multiple-path Thomson scattering according to a preferred embodiment of the present invention.

Referring to FIG. 2, a plasma diagnosis system 2 using multiple-path Thomson scattering according to the present invention is installed outside a tokamak 5 of a nuclear fusion reactor and includes a light source 200, a first half wave plate 210, an optical system 220 which sequentially supplies a vertically-polarized pulsed laser beam and a horizontally-polarized pulsed laser beam to the tokamak, a collection optic system 230 which collects scattered light in the tokamak, a trigger module 240, and a controller 250.

The light source 200 outputs a pulsed laser beam in a horizontal polarization state with a single wavelength of 1064 nm and a strong electric field intensity.

The first half wave plate (HWP) 210 is disposed on the optical path of the pulsed laser beam output from the light source to select and maintain the polarization state of the propagating pulsed laser beam.

The optical system 220 is provided between the light source and the tokamak 5 to sequentially supply a pulsed laser beam in a vertical polarization state and a pulsed laser beam in a horizontal polarization state to the tokamak when the pulsed laser beam is supplied from the light source.

The optical system 220 includes a polarizing beam splitter (PBS) 221 disposed on the optical path of the pulsed laser beam supplied from the light source, a reflecting mirror 223, a second half wave plate 222, a first beam focusing unit 225, a second beam focusing unit 227, and an optical path changing unit 229,

The polarizing beam splitter (PBS) 221 transmits the beam in the horizontal polarization state and reflects the beam in the vertical polarization state.

The reflecting mirror 223 is disposed on the optical path in which the pulsed laser beam supplied from the light source is reflected by the PBS, so that the pulsed laser beams transmitted from the PBS is supplied to the PBS again.

The second half wave plate 222 is disposed between the PBS 221 and the first beam focusing unit 225 to rotate the polarization state of the incident pulsed laser beam by 90 degrees and outputs the rotated pulsed laser beam. The second half wave plate may not be used depending on the Thomson scattering and the position of the optical system which collects a Thomson signal.

The first beam focusing unit 225 is provided with two convex lenses L1 and L2 are disposed at positions separated by certain distances from the two ends of the tokamak of the nuclear fusion reactor so that the pulsed laser beams are focused in the first region inside the plasma. The first beam focusing unit is disposed on an optical path in which the horizontally polarized light supplied from the light source passes through the PBS and is converted into vertically polarized light by the second half wave plate.

The second beam focusing unit 227 is provided with two convex lenses L3 and L4 disposed at positions separated by certain distances from two ends of the tokamak of the nuclear fusion reactor so that the pulsed laser beams are focused on the second region in the plasma. Meanwhile, the second beam focusing unit 227 is configured so that the horizontally polarized light reflected from the reflecting mirror 223 passes through the PBS to be incident or is configured so that the vertically polarized light output from the first beam focusing unit 225 is reflected by the PBS to be incident.

These convex lenses constituting the first and second beam focusing units 225 and 227 are generally installed outside the tokamak. However, these convex lenses may be installed inside the tokamak depending on the shape of the tokamak.

The optical path changing unit 229 may be configured with optical path changing elements such as prisms and folding mirrors so as to supply the pulsed laser beam output from the first optical focusing unit to the second optical focusing unit or so as to supply the pulsed laser beam output from the second optical focusing unit to the first optical focusing unit.

In the plasma diagnosis system having the above-described configuration according to the present invention, the pulsed laser beams in a vertical polarization state or the horizontal polarization state is supplied to first and second region in the plasma in the tokamak of the nuclear fusion reactor through the first and second beam focusing units of the optical system, so that multiple-path scattering is generated in the plasma. In particular, when the pulsed laser beams in the vertical polarization state are supplied by the first and second beam focusing units, Thompson scattering is generated in the first and second regions of the plasma, and when the pulsed laser beams in the horizontal polarization state are supplied, Thomson scattering is not generated in the first and second regions.

The collection optic system 230 measures the intensities of the first and second collection signals acquired by collecting light scattered from the plasma in the tokamak. The collection optic system performs collection according to a trigger signal of the trigger module and supplies the collection signals to the controller. The first collection signal is a signal obtained by collecting signals scattered from the plasma by the pulsed laser beam focused by the first focusing unit, and the second collection signal is a signal obtained by collecting signals scattered from the plasma by the pulsed laser beam focused by the second focusing unit. The first and second collection signals are configured with one of a Thomson scattering signal, a mixed signal formed by mixing a Thomson scattering signal and a background scattering noise signal, and a background scattering noise signal according to the polarization state of the focused pulsed laser beam. In the case where the horizontally polarized pulsed laser beam is focused, the first and second collection signals are configured with the mixed signal of the Thomson scattering signal and the background scattering noise signal are mixed. In the case where the vertically polarized pulsed laser beam is focused, Thompson scattering is not generated, so that the first and second collection signals are configured with only the background scattering noise signal.

The collection optic system 230 may be configured with a single collection optic system or may be configured with a first collection optic system for the first region inside the tokamak and a second collection optic system for the second region. In the case where the collection optic system is configured with the first collection optic system and the second collection optic system, an average value of the collection signals measured by the first and second collection optic systems is used as a collection signal, so that the error in the collection signal depending on measurement position inside the tokamak can be minimized.

The trigger module 240 generates a trigger signal and outputs the trigger signal to the collection optic system and/or the controller when the pulsed laser beam in the horizontal polarization state and the pulsed laser beam in the vertical polarization state are supplied from the optical system. The trigger module may detect an extra laser beam signal transmitted through a folding mirror disposed at a trigger point set between the light source and the optical system or at an arbitrary position of the optical system to use the extra laser beam signal as a trigger signal.

The collection optic system is driven according to the trigger signal output from the trigger module to collect light scattered in the tokamak and supply the scattered light.

The controller 250 measures a Thomson scattering signal with no background scattering noise signal by using the first and second collection signals supplied from the collection optic system and supplies the Thomson scattering signal. More specifically, the controller allows Thomson scattering to be generated from the plasma in the tokamak by the pulsed laser beam in the vertical polarization state of the optical system and measures the mixed signal in which the Thomson scattering signal and the background scattering noise signal are mixed. In addition, the controller allows Thomson scattering not to be generated from the plasma in the tokamak by the pulsed laser beam in the horizontal polarization state of the optical system and measures a signal configured with only the background scattering noise signal. Therefore, the controller can accurately measure only the pure Thomson scattering signal by removing the background scattering noise signal from the mixed signal in which the Thompson scattering signal and the background scattering noise signal are mixed.

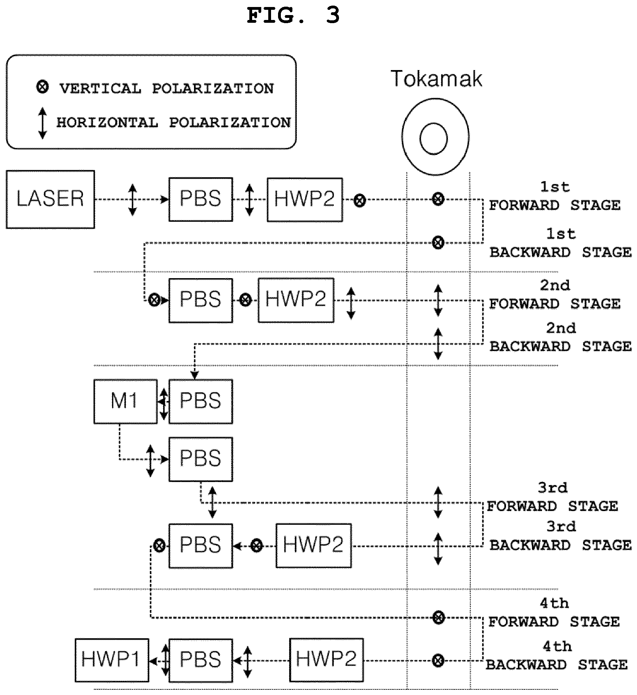

Hereinafter, the operation of the plasma diagnosis system using multiple-path Thompson scattering having the above-described configuration according to the preferred embodiment of the present invention will be described in detail with reference to FIG. 3. In the plasma diagnosis system according to the preferred embodiment of the present invention, when the pulsed laser beam in the horizontal polarization state is output from the light source, the pulsed laser beam is reciprocated four times through the optical system, so that Thompson scattering is generated in the plasma.

FIG. 3 is a diagram illustrating a polarization state of the pulsed laser beam in each stage in the plasma diagnosis system using multiple-path Thompson scattering according to the preferred embodiment of the present invention.

Referring to FIG. 3, when the pulsed laser beam in the horizontal polarization state is outputted from the light source, in the first forward stage, the beam in the horizontal polarization state passes through the PBS 221, becomes the vertically polarized pulsed beam by the second half wave plate 222, and is focused on the first region inside the tokamak, so that the Thomson scattering and the background scattering are generated. At this time, the first collection optic system measures the first-1 collection signal in which the background scattering noise signal and the Thomson scattering signal are mixed for the first region.

In the first backward stage, the beam in the vertical polarization state that has passed through the tokamak is focused again on the second region inside the tokamak, so that the Thomson scattering and the background scattering are generated. At this time, the second collection optic system measures the first-2 collection signal in which the background scattering noise signal and the Thomson scattering signal are mixed for the second region. Then, the beam in the vertical polarization state is reflected by the PBS 221 and propagates to the second forward stage.

In the second forward stage, after being incident on the PBS 221 and reflected therefrom, the beam in the horizontal polarization state from the second HWP 222 is focused on the first region inside the tokamak, so that only the background scattering is generated. At this time, the first collection optic system measures the second-1 collection signal configured with only the background scattering noise signal for the first region.

In the second backward stage, the beam in the horizontal polarization state that has passed through the first region inside the tokamak is focused again on the second region inside the tokamak and is incident on the PBS 221 without Thomson scattering. The beam in the horizontal polarization state passes through the PBS, propagates to the reflecting mirror 223, and is rotated by 90 degrees by the second HWP 222 to be in the horizontal polarization state. At this time, the second collection optic system measures only the second-2 collection signal configured with only the background scattering noise signal for the second region.

In the third forward stage, the beam in the horizontal polarization state is incident on the PBS 221, passes through the PBS 221, propagates to the reflecting mirror 223, is reflected by the reflecting mirror, is again incident on the PBS, passes through the PBS, and is focused on the second region inside the tokamak, so that only the background scattering is generated. At this time, the second collection optic system measures the third-1 collection signal configured with only the background scattering noise signal for the second region.

In the third backward stage, the beam in the vertical polarization state that has passed through the second region inside the tokamak is focused again on the first region inside the tokamak, so that only background scattering is generated. After that, this beam is incident on the second half wave plate . The beam in the horizontal polarization state is rotated by 90 degrees and converted into a beam in the vertical polarization state, which is incident on the PBS. At this time, the first collection optic system measures the third-2 collection signal configured with only the background scattering noise signal for the first region.

In the fourth forward stage, the beam in the vertical polarization state is incident on the PBS and is focused into the second region inside the tokamak, so that Thomson scattering is generated. At this time, the second collection optic system measures the fourth-1 collection signal in which the background scattering noise signal and the Thompson scattering signal are mixed for the second region.

In the fourth backward stage, the beam in the vertical polarization state is focused into the first region inside the tokamak, so that Thomson scattering is generated. At this time, the first collection optic system measures the fourth-2 collection signal in which the background scattering noise signal and the Thompson scattering signal are mixed for the first region.

The controller receives the first-1, first-2, fourth-1, and fourth-2 collection signals in which the background scattering noise signal and the Thomson scattering signal are mixed from the first and second collection optic systems and receives the second-1, second-2, third-1, and third-2 collection signals configured with only the background scattering noise signal. By using these collection signals, the controller can accurately measure only the Thomson scattering signal. The controller can minimize the error according to the position of the tokamak by using the average value from summation of the respective collection signals.

As described above, the plasma diagnosis system using the Thomson scattering according to the present invention can accurately measure the Thomson scattering signal.

In addition, the plasma diagnosis system according to the present invention can be applied to a tokamak-type nuclear fusion reactor. In this case, the optical system focuses the pulsed laser beam into the tokamak, the collection optic system collects scattered optical signals from the tokamak, and the controller measures the Thomson scattering signal in the tokamak.

While the present invention has been particularly illustrated and described with reference to exemplary embodiments thereof, it should be understood by the skilled in the art that the invention is not limited to the disclosed embodiments, but various modifications and applications not illustrated in the above description can be made without departing from the scope of the invention as defined in the appended claims. In addition, differences relating to the modifications and applications should be construed as being included within the scope of the invention as set forth in the appended claims.

### INDUSTRIAL APPLICABILITY

The plasma diagnosis system according to the present invention can be used variously in apparatuses requiring measurement of the temperature and density of plasma, and in particular, can be used to diagnose the state of plasma inside a tokamak-type nuclear fusion reactor.

## Claims

1. A plasma diagnosis system using multiple-path Thomson scattering, comprising:
a light source (200) which supplies pulsed laser beams having predetermined polarization and wavelength;
an optical system (220) which includes first and second beam focusing units (225, 227) performing respectively focusing on different first and second regions in plasma and supplies a pulsed laser beam in a vertical polarization state and a pulsed laser beam in a horizontal polarization state to the first and second beam focusing units by using the pulsed laser beams supplied from the light source;
a collection optic system (230) which measures a first collection signal obtained by collecting signals scattered from the plasma by the pulsed laser beam focused by the first focusing unit (225) and a second collection signal obtained by collecting signals scattered from the plasma by the pulsed laser beam focused by the second focusing unit (227) and provides the first and second collection signals; and
a controller (250) which measures a Thomson scattering signal for the plasma by using the first and second collection signals measured by the collection optic system (230),
wherein the pulsed laser beams are supplied to the first and second regions in the plasma through the first and second beam focusing units, so that multiple-path scattering is generated in the plasma, and
wherein the first and second collection signals are configured with one of a mixed signal in which a Thomson scattering signal and a background scattering noise signal are mixed and a background scattering noise signal according to a polarization state of a focused pulsed laser beam,
wherein the optical system (220) includes:
a polarizing beam splitter PBS (221) which is disposed on an optical path of the pulsed laser beam supplied from the light source;
a reflecting mirror (223) which is disposed on optical path in which the pulsed laser beam supplied from the light source is reflected by the PBS;
the first beam focusing unit (225) which includes two convex lenses disposed at positions separated by predetermined distances from two ends of the plasma and is configured to focus the pulsed laser beams in the first region in the plasma;
the second beam focusing unit (227) which includes two convex lenses disposed at positions separated by predetermined distances from two ends of the plasma and is configured to focus the pulsed laser beams in the second region in the plasma;
a half wave plate (222) which is disposed between the PBS and the first beam focusing unit; and
an optical path changing unit (229) which supplies the pulsed laser beam output from the first beam focusing unit to the second beam focusing unit or supplies the pulsed laser beam output from the second beam focusing unit to the first beam focusing unit, and
wherein the pulsed laser beam in the vertical polarization state and the pulsed laser beam in the horizontal polarization state are supplied to the first and second regions in the plasma through the first and second beam focusing units at least two or more times, so that multiple-path Thomson scattering is generated in the plasma.

2. The plasma diagnosis system according to claim 1, further comprising an optical isolator (210) between the light source (200) and the optical system 220, wherein the optical isolator (210) causes the pulsed laser beam supplied from the light source (200) to propagate to the optical system (220) but prevents the beam output from the optical system (220) from re-entering the light source (200).

3. The plasma diagnosis system according to claim 1, further comprising a trigger module (240) which generates and outputs trigger signals when the pulsed laser beams in the horizontal polarization state and the pulsed laser beams in the vertical polarization state are supplied from the optical system (220), respectively,
wherein the collection optic system (230) is driven according to the trigger signals output from the trigger module (240).

4. The plasma diagnosis system according to claim 3,
wherein the trigger module (240) is disposed between the light source 200 and the optical system (220) or at an arbitrary position of the optical system (220), and
wherein the trigger module (240) generates and outputs the trigger signal when detecting that the pulsed laser beam is supplied from the light source (200) to the optical system (220), detecting that the pulsed laser beam is supplied from the optical system (220) to the plasma, or detecting that the pulsed laser beam is supplied at an arbitrary position of the optical system.

5. The plasma diagnosis system according to claim 1,
wherein the collection optic system (230) is configured with first and second collection optic systems, and
wherein the first collection optic system measures a scattering signal of the first collection optic system to supply a first collection signal, and the second collection optic system measures a scattering signal of the second collection optic system to supply a second collection signal.

6. The plasma diagnosis system according to any one of claims 1 to 4, wherein the optical system (220) focuses the pulsed laser beam into the plasma, the collection optic system collects and measures scattered optical signals in the plasma, and the controller measures the Thomson scattering signal without the background scattering noise signal in the plasma.

7. A plasma apparatus comprising the plasma diagnosis system according to any one of claims 1 to 4,
wherein the plasma diagnosis system measures temperature and density of electrons in the plasma apparatus.

## Patentansprüche

1. Plasma-Diagnosesystem unter der Verwendung von multipler-Pfad Thomson-Streuung, umfassend:
eine Lichtquelle (200) die gepulste Laserstrahlen mit einer vorbestimmten Polarisation und Wellenlänge zuführt;
ein optisches System (220), das erste und zweite den Strahl fokussierende Einheiten (225, 227) einschließt, die jeweils eine Fokussierung auf unterschiedliche erste und zweite Regionen im Plasma durchführen und einen gepulsten Laserstrahl in einem vertikalen Polarisationszustand und einen gepulsten Laserstrahl in einem horizontalen Polarisationszustand zu den ersten und zweiten den Strahl fokussierenden Einheiten unter der Verwendung der gepulsten Laserstrahlen zuführt, die von der Lichtquelle zugeführt werden;
ein optisches Sammelsystem (230) das ein erstes Sammelsignal erhalten durch Sammeln von Signalen wie aus dem Plasma durch den gepulsten Laserstrahl wie fokussiert durch die erste Fokussierungseinheit (225) gestreut und ein zweites Sammelsignal erhalten durch Sammeln von Signale wie aus dem Plasma durch den gepulsten Laserstrahl wie fokussiert durch die zweite Fokussierungseinheit (227) gestreut misst, und das das erste und zweite Sammelsignal zur Verfügung stellt; und
einen Controller (250), der ein Thomson-Streuungssignal für das Plasma unter Verwendung der ersten und zweiten Sammelsignale wie durch das optische Sammelsystem (230) gemessen misst,
wobei die gepulsten Laserstrahlen durch die ersten und zweiten Strahl fokussierenden Einheiten zu den ersten und zweiten Regionen in dem Plasma zugeführt werden, so dass eine mehrfach-Pfad Streuung in dem Plasma erzeugt wird, und
wobei die ersten und zweiten Sammelsignale mit einem eines gemischten Signals konfiguriert werden, in dem ein Thomson Streuungssignal und ein Hintergrund Streuungs-Verzerrungssignal gemischt werden und ein Hintergrund Streuungs-Verzerrungssignal gemäß eines Polarisationszustandes eines fokussierten gepulsten Laserstrahls,
wobei das optische System (220) einschließt:
einen polarisierenden Strahl-Splitter PBS (221) der auf einem optischen Pfad des gepulsten Laserstrahls der von der Lichtquelle zugeführt wird angeordnet ist;
einen reflektierenden Spiegel (223) der auf dem optischen Pfad des gepulsten Laserstrahls wie von der Lichtquelle zugeführt angeordnet wie dieser durch den PBS reflektiert wird;
die erste den Strahl fokussierende Einheit (225) die zwei konvexe Linsen einschließt, angeordnet an Positionen durch vorbestimmte Abstände von zwei Enden des Plasmas getrennt und so angeordnet, um die gepulsten Laserstrahlen in der ersten Region in dem Plasma zu fokussieren;
die zweite den Strahl fokussierende Einheit (227) die zwei konvexe Linsen einschließt, angeordnet an Positionen durch vorbestimmte Abstände von zwei Enden des Plasmas getrennt und so angeordnet, um die gepulsten Laserstrahlen in der zweiten Region in dem Plasma zu fokussieren;
eine I/2 Platte (222), die zwischen dem BS und der ersten den Strahl fokussierenden Einheit angeordnet ist; und
eine den optischen Pfad verändernde Einheit (229), die die gepulste Laserstrahl-Ausgabe von der ersten den Strahl fokussierenden Einheit zu der zweiten den Strahl fokussierenden Einheit zuführt oder den gepulsten Laserstrahl-Ausgabe von der zweiten den Strahl fokussierenden Einheit zu der ersten den Strahl fokussierenden Einheit zuführt, und
wobei der gepulste Laserstrahl in dem vertikalen Polarisationszustand und der gepulste Laserstrahl in dem horizontalen Polarisationszustand zu den ersten und zweiten Regionen in dem Plasma durch die ersten und zweiten den Strahl fokussierenden Einheiten mindestens zwei oder mehr Male zugeführt wird, so dass eine multiple-Pfad Thomson-Streuung in dem Plasma erzeugt wird.

2. Plasma-Diagnosesystem nach Anspruch 1, weiter umfassend einen optischen Isolator (210) zwischen der Lichtquelle (200) und dem optischen System 220, wobei der optische Isolator (210) es verursacht, dass der gepulste Laserstrahl, der von der Lichtquelle (200) zugeführt wird zu dem optischen System (220) zugeführt wird, jedoch einen Wiedereintritt der Strahl-Ausgabe aus dem optischen System (220) in die Lichtquelle (200) verhindert.

3. Plasma-Diagnosesystem nach Anspruch 1, weiter umfassend ein Auslösemodul (240) das jeweils Auslösesignale erzeugt und ausgibt, wenn die gepulsten Laserstrahlen im horizontalen Polarisationszustand und die gepulsten Laserstrahlen im vertikalen Polarisationszustand von dem optischen System (220) zugeführt werden,
wobei das optische Sammelsystem (230) gemäß den Auslöse-Signalausgaben des Auslösemoduls (240) angetrieben wird.

4. Plasma-Diagnosesystem nach Anspruch 3,
wobei das Auslösemodul (240) zwischen der Lichtquelle 200 und dem optischen System (220) oder an einer arbiträren Position des optischen Systems (220) angeordnet ist, und
wobei das Auslösemodul (240) das Auslösesignal erzeugt und ausgibt, wenn nachgewiesen wird, dass der gepulste Laserstrahl von der Lichtquelle (200) zu dem optischen System (220) zugeführt wird, nachgewiesen wird, dass der gepulste Laserstrahl von dem optischen System (220) zu dem Plasma zugeführt wird, oder nachgewiesen wird, dass der gepulste Laserstrahl an einer arbiträren Position des optischen Systems zugeführt wird.

5. Plasma-Diagnosesystem nach Anspruch 1,
wobei das optische Sammelsystem (230) mit ersten und zweiten optischen Sammelsystemen aufgebaut ist, und
wobei das erste optische Sammelsystem ein Streusignal des ersten optischen Sammelsystems misst, um ein erstes Sammelsignal zuzuführen, und das zweite optische Sammelsystem ein Streusignal des zweiten optischen Sammelsystems misst, um ein zweites Sammelsignal zuzuführen.

6. Plasma-Diagnosesystem nach einem der Ansprüche 1 bis 4, wobei das optische System (220) den gepulsten Laserstrahl in das Plasma hinein fokussiert, das optische Sammelsystem gestreute optische Signale in dem Plasma sammelt und misst und der Controller das Thomson Streuungssignal ohne das Hintergrund Streuungs-Verzerrungssignal in dem Plasma misst.

7. Plasmavorrichtung, umfassend das Plasma-Diagnosesystem nach einem der Ansprüche 1 bis 4,
wobei das Plasma-Diagnosesystem die Temperatur und Dichte von Elektronen in der Plasmavorrichtung misst.

## Revendications

1. Système de diagnostic plasma utilisant une diffusion Thomson à trajets multiples, comprenant :
une source de lumière (200) qui fournit des faisceaux laser pulsés ayant une polarisation et une longueur d'onde prédéterminées ;
un système optique (220) qui comporte des première et deuxième unités de focalisation de faisceau (225, 227) effectuant une focalisation, respectivement, sur des première et deuxième régions différentes du plasma, et qui fournit un faisceau laser pulsé dans un état de polarisation verticale et un faisceau laser pulsé dans un état de polarisation horizontale aux première et deuxième unités de focalisation de faisceau, en utilisant les faisceaux laser pulsés fournis par la source de lumière ;
un système optique de collecte (230) qui mesure un premier signal de collecte obtenu en collectant des signaux diffusés à partir du plasma par le faisceau laser pulsé focalisé par la première unité de focalisation (225), et un second signal de collecte obtenu en collectant des signaux diffusés à partir du plasma par le faisceau laser pulsé focalisé par la seconde unité de focalisation (227), et qui fournit les premier et second signaux de collecte ; et
une unité de commande (250) qui mesure un signal de diffusion Thomson pour le plasma en utilisant les premier et second signaux de collecte mesurés par le système optique de collecte (230),
dans lequel les faisceaux laser pulsés sont fournis aux première et deuxième régions du plasma à travers les première et deuxième unités de focalisation de faisceau, de sorte qu'une diffusion à trajets multiples soit générée dans le plasma, et
dans lequel les premier et second signaux de collecte sont configurés avec l'un parmi un signal mixte, dans lequel sont mélangés un signal de diffusion Thomson et un signal de diffusion de bruit de fond, et un signal de diffusion de bruit de fond selon un état de polarisation d'un faisceau laser pulsé focalisé,
dans lequel le système optique (220) comporte :
un séparateur de faisceau polarisant PBS (221) qui est disposé sur un chemin optique du faisceau laser pulsé fourni par la source de lumière ;
un miroir réfléchissant (223) qui est disposé sur un chemin optique dans lequel le faisceau laser pulsé fourni par la source de lumière est réfléchi par le PBS ;
la première unité de focalisation de faisceau (225) qui comporte deux lentilles convexes disposées à des positions séparées par des distances prédéterminées de deux extrémités du plasma, et qui est configurée pour focaliser les faisceaux laser pulsés dans la première région du plasma ;
la seconde unité de focalisation de faisceau (227) qui comporte deux lentilles convexes disposées à des positions séparées par des distances prédéterminées de deux extrémités du plasma, et qui est configurée pour focaliser les faisceaux laser pulsés dans la seconde région du plasma ;
une plaque demi-onde (222) qui est disposée entre le PBS et la première unité de focalisation de faisceau ; et
une unité de changement de chemin optique (229) qui fournit le faisceau laser pulsé émis de la première unité de focalisation de faisceau à la seconde unité de focalisation de faisceau, ou qui fournit le faisceau laser pulsé émis de la seconde unité de focalisation de faisceau à la première unité de focalisation de faisceau, et
dans lequel le faisceau laser pulsé dans l'état de polarisation verticale et le faisceau laser pulsé dans l'état de polarisation horizontale sont fournis au moins deux fois ou plus aux première et deuxième régions du plasma à travers les première et deuxième unités de focalisation de faisceau, de sorte qu'une diffusion Thomson à trajets multiples soit générée dans le plasma.

2. Système de diagnostic plasma selon la revendication 1, comprenant en outre un isolateur optique (210) entre la source de lumière (200) et le système optique (220), dans lequel l'isolateur optique (210) amène le faisceau laser pulsé fourni par la source de lumière (200) à se propager vers le système optique (220) mais empêche le faisceau émis par le système optique (220) d'entrer de nouveau dans la source de lumière (200).

3. Système de diagnostic plasma selon la revendication 1, comprenant en outre un module de déclenchement (240) qui génère et émet des signaux de déclenchement lorsque les faisceaux laser pulsés dans l'état de polarisation horizontale et les faisceaux laser pulsés dans l'état de polarisation verticale sont respectivement fournis par le système optique (220),
dans lequel le système optique de collecte (230) est excité selon les signaux de déclenchement émis par le module de déclenchement (240).

4. Système de diagnostic plasma selon la revendication 3,
dans lequel le module de déclenchement (240) est disposé entre la source de lumière (200) et le système optique (220) ou à une position arbitraire du système optique (220), et
dans lequel le module de déclenchement (240) génère et émet le signal de déclenchement lorsqu'il détecte que le faisceau laser pulsé est fourni par la source de lumière (200) au système optique (220), lorsqu'il détecte que le faisceau laser pulsé est fourni par le système optique (220) au plasma, ou lorsqu'il détecte que le faisceau laser pulsé est fourni à une position arbitraire du système optique.

5. Système de diagnostic plasma selon la revendication 1,
dans lequel le système optique de collecte (230) est configuré avec des premier et second systèmes optiques de collecte, et
dans lequel le premier système optique de collecte mesure un signal de diffusion du premier système optique de collecte pour fournir un premier signal de collecte, et le second système optique de collecte mesure un signal de diffusion du second système optique de collecte pour fournir un second signal de collecte.

6. Système de diagnostic plasma selon l'une quelconque des revendications 1 à 4, dans lequel
le système optique (220) focalise le faisceau laser pulsé dans le plasma, le système optique de collecte, collecte et mesure des signaux optiques diffusés dans le plasma, et l'unité de commande mesure le signal de diffusion Thomson sans le signal de diffusion de bruit de fond dans le plasma.

7. Appareil à plasma comprenant le système de diagnostic plasma selon l'une quelconque des revendications 1 à 4,
dans lequel le système de diagnostic plasma mesure la température et la densité des électrons dans l'appareil à plasma.
